# EUROPEAN PATENT APPLICATION

(11) **EP 1 638 258 A1**
(43) Date of publication of application: **22.03.2006**
(21) Application number: 05019579.1
(22) Date of filing: 08.09.2005
(51) Int. Cl.: H04L 12/28, H04L 12/56, H04Q 7/32

(54) **Method and system for automatically configuring a wireless peripheral device in a network environment**

(30) Priority: 16.09.2004 US 610646 P; 06.04.2005 US 100150
(71) Applicant: SEIKO EPSON CORPORATION, Shinjuku-ku, Tokyo 163-0811 (JP)
(72) Inventor: Lehotsky, Daniel Adolf, Waterloo, Ontario N2K 4G2 (CA); Zeng, Gang, Markham, Ontario L3R 9H6 (CA); Nobutani, Tsutomu, Toronto, Ontario M2N 6N3 (CA)
(74) Representative: Grünecker, Kinkeldey, Stockmair & Schwanhäusser Anwaltssozietät

(57) **Abstract**

A method of automated wireless peripheral device configuration in a network environment comprises conditioning an existing networked wireless peripheral device to transmit configuration data to a new wireless peripheral device to be added to the network environment. At the new wireless peripheral device, the configuration data is received and automatically is applied to enable to new wireless peripheral device to assume network operation.

## Description

This application claims the benefit of U.S. Provisional Application No. 60/610,646 filed September 16, 2004.

### Field of the Invention

The present invention relates generally to peripheral devices such as for example printers, and in particular to a method and system for automatically configuring a wireless peripheral device in a network environment.

### Background of the Invention

Printers, including single and multi-function printers and other devices with printing capabilities, are being deployed in a widening variety of environments and are being provided with increased functionality in response to consumer needs. The configuration of such printers to customize them for the requirements of particular environments is well understood. Printers typically have a number of user-configurable settings that permit configuration of their functionality. Such user-configurable functionality can include the printing of banner pages for each print job, the powering down of the printer during periods of inactivity, automated pausing of a print job while the output tray is cleared, the print languages used by the printer, etc.

The user-configurable settings also include network settings that can be modified to enable the printers to communicate with other devices over a network in a desired manner. For example, where a printer includes a network interface and is capable of communication over an Internet Protocol ("IP") network, the network settings can include the IP address assigned to the printer, the subnet mask of the network to which the printer is connected and the IP address of a gateway for accessing other IP addresses outside the subnet mask. Where the network interface is capable of connecting to a wireless local area network using IEEE 802.11x technology or the like, the network settings can include the service set identifier ("SSID") of the printer, the name of a preferred wireless network access point for the printer and various security settings (such as for example wired equivalent privacy ("WEP") or Windows product activation ("WPA")). Further, there can be other printer settings such as simple network management protocol ("SNMP") trap settings for automatic notification of printer error states and line printer requester ("LPR") settings for setting print queue information.

Adding a wireless printer to a wireless local area network requires intimate knowledge of the wireless local area network topology and settings in order for the network to access the wireless printer. Typically, settings of the network host, the wireless network access point for the wireless printer and the wireless printer are manually updated to add the wireless printer to the wireless local area network. As will be appreciated, manually updating the settings of the network host, the wireless network access point and the wireless printer to add the wireless printer to the wireless local area network is a time consuming and difficult task requiring significant technical skill.

Techniques for updating printer parameters are known. For example, U.S. Patent No. 5,613,160 to Kraslavsky et al. discloses a method and apparatus for providing a network printer with default printing parameters, the printer including non-volatile memory for storing a default printing configuration code. The apparatus includes a Small Computer System Interface ("SCSI") that is coupled to the printer, a network interface coupled to a network and volatile memory coupled to both the SCSI and the network interface. A processor is coupled to the SCSI and the network interface. The SCSI interface transmits print data to be printed together with the default printing configuration code from the printer's non-volatile memory. The network interface receives the transmitted print data and the default printing configuration code and stores the received information in the non-volatile memory. The processor reads the default printing configuration code from the printer and communicates print data to the printer, along with the default printing configuration code. The printer then prints the print data and places itself in a pre-determined default printing configuration in accordance with the default printing configuration code.

U.S. Patent Nos. 5,905,906 and 6,112,256 to Goffinet et al. disclose a system for facilitating the communication of printer configurations between printers and a host computer using Network Printing Alliance Protocol messages.

U.S. Patent No. 5,960,167 to Roberts et al. discloses a method for providing access to printers over a network. The printers employ an advertising protocol to register themselves with a registry service. An auto install utility makes the printers available to all clients on the network.

U.S. Patent No. 6,745,255 to Yen et al. discloses a Bluetooth dongle that includes a universal serial bus (''USB'') interface, a Bluetooth transceiver module and non-volatile memory. Drivers for accessing Bluetooth functionality of the dongle via a computer coupled to the dongle via the USB interface are included in non-volatile memory. As a result, separate media having drivers need not be carried in order to install drivers on the computer to access Bluetooth functionality of the dongle.

U.S. Patent No. 6,754,723 to Kato discloses a system including a host device and at least one peripheral device connected to the host device. The host device and the peripheral device have identification codes that are used to download firmware suitable to allow combined operation of both devices.

U.S. Patent Application Publication No. 2002/0078200 to Helms discloses a system for managing peripheral devices in an Intranet through a firewall. The system includes a web site hosted on a server of a network outside of and coupled to the Intranet via the firewall. The web site is configured with one or more default device configurations including printer settings and/or control functions. One or more peripheral devices associated with at least one of the default device configurations is located inside the Intranet. The web site is used by a customer to determine the default device configurations that correspond to the peripheral devices. Each peripheral device is pre-configured to communicate a request for default device configuration to the web site upon being initialized. The request is formatted as a web page. In response to receiving the request from an initializing peripheral device, the web site is configured to communicate the default device configuration to the peripheral device as a web page. Upon receiving the web page including the default device configuration, the peripheral device parses the web page to determine the printer settings and/or control functions specified by the default device configuration. These printer settings and/or control functions are used by the peripheral device to configure itself.

U.S. Patent Application Publication No. 2003/00841132 to Ohta discloses a peripheral driver installation and configuration system. The system includes a server, a peripheral device, a client and a driver information setting module. The server executes a management program and a transmission control program. The management program manages installation configuration information generated when a driver for the peripheral device is installed on the client. The transmission control program controls the process of transmitting information concerning the location of the installation configuration information managed by the management program and the location of the driver information setting module in response to a request of the client.

U.S. Patent Application Publication No. 2003/0233488 to Ozaki et al. discloses a peripheral driver configuration system. Recognition means detect the installation of a driver program for a peripheral on a computer. Obtaining means obtains configuration information which is used for configuring the driver remotely. Activation means activates the obtaining means in response to the detection of the installation of the driver program by the recognition means. Setting means sets the configuration information obtained by the obtaining means so that it can be read by the driver.

U.S. Patent Application Publication No. 2004/0024933 to Billington et al. discloses a peripheral appliance that includes a network interface and a peripheral interface. The peripheral appliance can be connected to a network via the network interface and can be connected to a peripheral, such as for example a printer, via the peripheral interface.

U.S. Patent Application Publication No. 2004/0059842 to Hanson et al. discloses a system for installing a non-infrastructure network device including a device installation program located on a host device connected to a first sub-network, a device controller configured to be connected to a second sub-network for receiving network information for the first sub-network from the device installation program, and a device memory for storing the network information for the first sub-network.

Although the above references disclose techniques to update printer parameters, there exists a need to improve the configuration of wireless peripheral devices in a network environment. It is therefore an object of the present invention to provide a novel method and system for automatically configuring a wireless peripheral device in a network environment.

### Summary of the Invention

Accordingly, in one aspect there is provided a method of automated wireless peripheral device configuration in a network environment comprising:
conditioning an existing networked wireless peripheral device to transmit configuration data to a new wireless peripheral device to be added to the network environment;
receiving, at the new wireless peripheral device, the configuration data; and
automatically applying the configuration data to the new wireless peripheral device to enable the new wireless peripheral device to assume network operation.

In one embodiment, during the conditioning the existing networked wireless peripheral device is conditioned to a source mode in response to input and wherein prior to the receiving, the new wireless peripheral device is conditioned to a target mode in response to input. The input is entered into the existing and new wireless peripheral devices via user interfaces thereof. Prior to transmitting configuration data, the existing networked wireless peripheral device changes its current settings to default values, resets to put the default values into effect and generates the configuration data based on the default values. The new wireless peripheral device updates its settings in accordance with the configuration data and resets to put the updated settings into effect. The existing networked wireless peripheral device automatically returns its setting and resets upon completing the conditioning.

The existing networked wireless peripheral device remains in the source mode for a threshold period of time and the new wireless peripheral device remains in the target mode for a threshold period of time. The existing networked wireless peripheral device may transmit the configuration data to the new wireless peripheral device over a wireless communication link or a wired communication link.

According to another aspect there is provided a method of automatically configuring a new wireless printer to be added to a network environment including an existing wireless printer comprising:
placing the new wireless printer proximate to said existing wireless printer; and
conditioning the existing wireless printer to a source mode and the new wireless printer to a target mode wherein in said source mode, said existing wireless printer automatically transmits configuration data based on its settings to said new wireless printer and wherein in said target mode, said new wireless printer automatically applies received configuration data thereby to enable the new wireless printer to assume network operation.

According to yet another aspect there is provided a wireless peripheral device comprising:
memory storing wireless peripheral device configuration program code; and
a processor conditionable to execute said program code, upon execution of said program code, said processor transmitting network configuration data to a proximate wireless peripheral device to update and configure said proximate wireless peripheral device for network operation.

According to still yet another aspect there is provided a computer readable medium including a computer program for automated wireless peripheral device configuration, said computer program comprising:
computer program code for changing settings of a wireless peripheral device to preprogrammed default values;
computer program code for generating network configuration data based on said default values;
computer program code for transmitting the network configuration data to a proximate wireless peripheral device; and
computer program code for restoring the settings of said wireless peripheral device.

The automated wireless peripheral device configuration system and method provides advantages in that wireless peripheral devices can be automatically configured allowing them to assume network operation without requiring any knowledge of the network settings and topology. No changes to the network host and/or wireless network access point are required. This avoids the need to use highly skilled technicians to configure wireless peripheral devices for network operation.

### Brief Description of the Drawings

Embodiments will now be described more fully with reference to the accompanying drawings in which:
Figure 1 is a schematic diagram of a network environment including a wireless network access point and a plurality of wireless peripheral devices communicating with a wired network via the wireless network access point;
Figure 2 is a schematic diagram of the network environment of Figure 1 showing the addition of a new wireless printer;
Figure 3 is a flowchart showing the steps performed by an existing networked wireless printer when conditioned to a source mode during automated wireless peripheral device configuration;
Figure 4 is a flowchart showing the steps performed by a new wireless printer when conditioned to a target mode during automated wireless peripheral device configuration;
Figure 5 is the packet structure used by the existing and new wireless printers when communicating during automated wireless peripheral device configuration; and
Figures 6a and 6b are flowcharts showing the steps performed during communications between the existing and new wireless printers during automated wireless peripheral device configuration.

### Detailed Description of the Embodiments

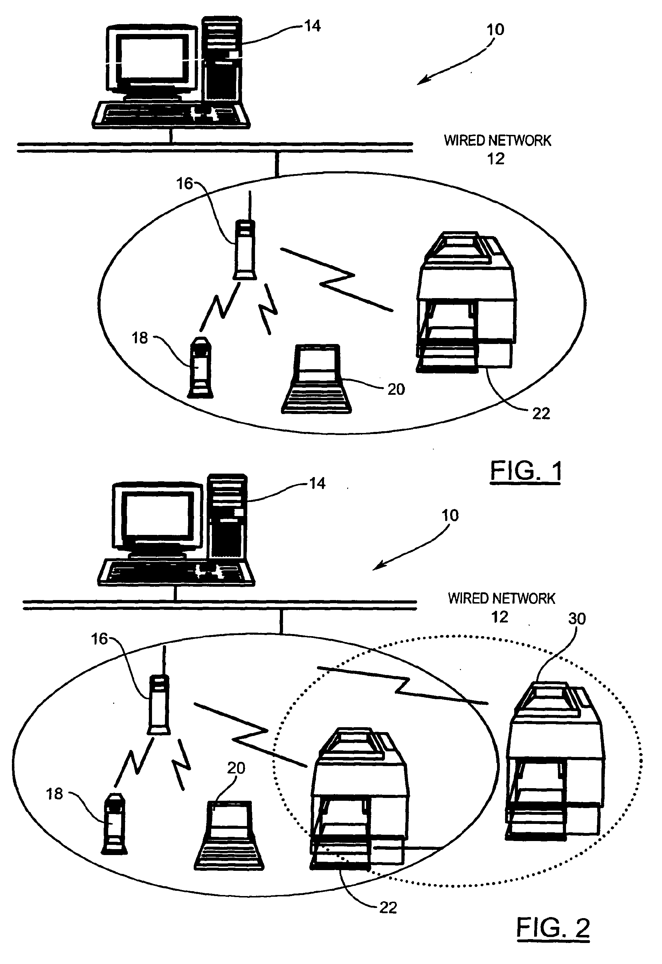

Turning now to Figure 1, a network environment is illustrated and is generally identified by reference numeral 10. Network environment 10 comprises a wired network 12 including a personal computer 14 and a wireless network access point 16. A plurality of wireless peripheral devices are shown communicating with the wired network 12 via the wireless network access point 16. In this case, the wireless peripheral devices include a personal digital assistant ("PDA") 18, a laptop computer 20 and a wireless printer 22. The wireless printer 22 in this embodiment communicates with the wireless network access point 16 using IEEE 802.11 x technology. Although the wired network 12 is shown as including a single personal computer 14 and a single wireless network access point 16 and although the wireless network access point 16 is shown as communicating with three (3) wireless peripheral devices 18 to 22, those of skill in the art will appreciate that this is for ease of illustration only. The network environment 10 may include virtually any number of personal computers, wireless network access points, servers and wireless peripheral devices.

As mentioned previously, adding wireless peripheral devices to the network environment 10 can be time consuming and complicated requiring significant technical skill. To facilitate adding wireless printers to the network environment 10, the wireless printers are provided with automated wireless peripheral device configuration firmware stored therein that can be executed by processors therein to enable existing networked wireless printers to configure automatically wireless printers to be added ("new") to the network environment 10.

The automated wireless peripheral device configuration firmware is executed by the wireless printer in response to user input and can condition the wireless printer either to a source mode or a target mode. Specifically, when an existing networked wireless printer 22 is to be used to configure automatically a new wireless printer, the existing wireless printer is conditioned to the source mode.
When a new wireless printer is to be configured automatically so that it may assume network operation, the new wireless printer is conditioned to the target mode. Further specifics of automated wireless peripheral device configuration, in this case wireless printer configuration, will now be described with reference to Figures 2 to 6b.

When a new wireless printer 30 is to be added to the network environment 10, the new wireless printer 30 is placed proximate to the existing wireless printer 22 as shown in Figure 2. With the wireless printers 22 and 30 in proximity, the existing wireless printer 22 is conditioned to the source mode and the new wireless printer 30 is conditioned to the target mode. In order to condition the existing wireless printer 22 to the source mode, the cover of the wireless printer 22 is opened, its paper feed button (not shown) is pressed a preset number of times, in this example two (2) times, and the cover of the wireless printer 22 is closed. Performing these simple steps using the user interface of the wireless printer 22 causes the wireless printer to execute the automated wireless peripheral device configuration firmware therein resulting in the wireless printer 22 entering the source mode. To condition the new wireless printer 30 to the target mode, the cover of the wireless printer 30 is opened, its paper feed button (not shown) is pressed a preset number of times, in this example three (3) times, and the cover of the wireless printer 30 is closed. Similarly, performing these simple steps using the user interface of the wireless printer 30 causes the wireless printer to execute the automated wireless peripheral device configuration firmware therein resulting in the wireless printer 30 entering the target mode.

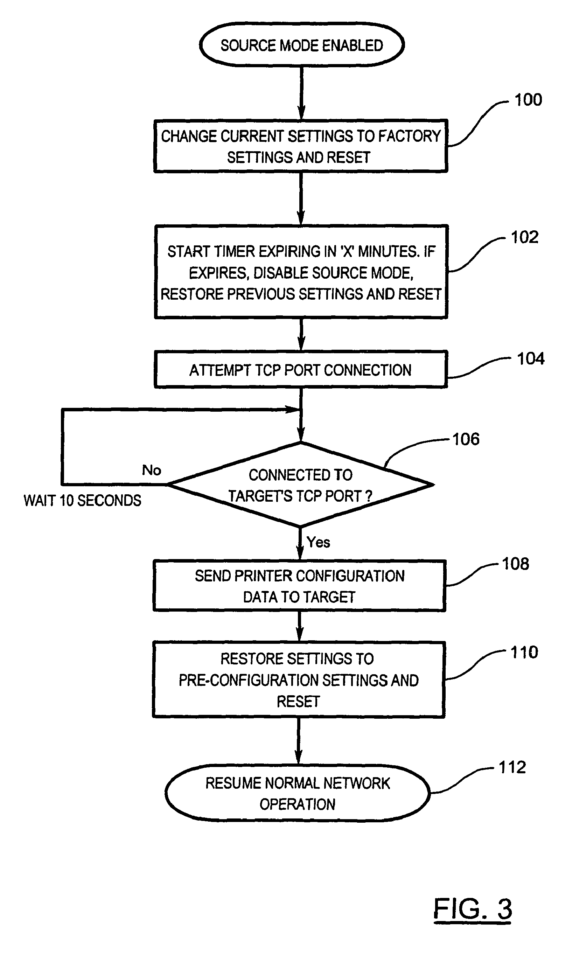

When the existing networked wireless printer 22 executes the automated wireless peripheral device configuration firmware and enters the source mode, the wireless printer 22 automatically changes its current settings to its preprogrammed factory settings and resets so that the factory settings take effect (step 100 in Figure 3). A timer is then initiated to establish the time period by which automated wireless peripheral device configuration must be completed (step 102). With the timer initiated, the wireless printer 22 attempts to connect to the transmission control protocol ("TCP") port of the new wireless printer 30 over a wireless communications link (step 104). A check is then made to determine if the attempt to connect to the TCP port of the new wireless printer 30 was successful (step 106). If not, the wireless printer 22 waits ten (10) seconds before returning to step 106 to make another check.

If the result of the check at step 106 is positive, the wireless printer 22 sends printer configuration data to the new wireless printer 30 based on its factory settings (step 108). The printer configuration data that is transmitted to the new wireless printer 30 includes the printer SSID, the network mode, the network transmission rate, RTS threshold, power management, access point density, authentication, encryption and the encryption key. After the printer configuration data has been successfully transmitted to the new wireless printer 30, the wireless printer 22 automatically restores its settings and resets so that its previous settings take effect (step 110). At this point, the wireless printer 22 is able to resume its normal network operation (step 112).

If the timer expires prior to completion of automated wireless peripheral device configuration, the wireless printer 22 is automatically conditioned to restore its settings and reset so that the wireless printer resumes its normal network operation. Completing automated wireless peripheral device configuration in this case requires the wireless printer 22 to be reconditioned to the source mode using the user interface of the wireless printer in the manner described previously.

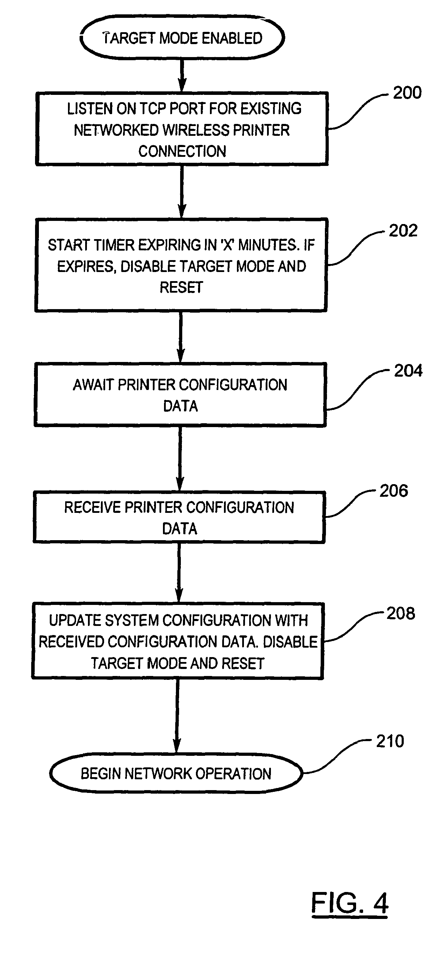

When the new wireless printer 30 executes the automated wireless peripheral device configuration firmware and enters the target mode, the wireless printer 30 listens on its TCP port for an existing networked wireless printer connection (step 200 in Figure 4). When a connection to the existing networked wireless printer 22 is made, a timer is initiated to establish the time period by which the wireless printer 30 must be configured (step 202). At this stage, the wireless printer 30 awaits receipt of printer configuration data from the wireless printer 22 (step 204). Upon successful receipt of the printer configuration data from the wireless printer 22 (step 206), the wireless printer 30 automatically updates its settings using the received printer configuration data. The wireless printer 30 then automatically exits the target mode and resets so that the updated settings of the wireless printer take effect (step 208). At this point, the new wireless printer 30 is able to assume network operation (step 210).

If the timer expires prior to configuration of the new wireless printer 30, the wireless printer 30 exits the target mode and resets. Completing automated wireless peripheral device configuration in this case requires the wireless printer 30 to be reconditioned to the target mode using the user interface of the wireless printer in the manner described previously.

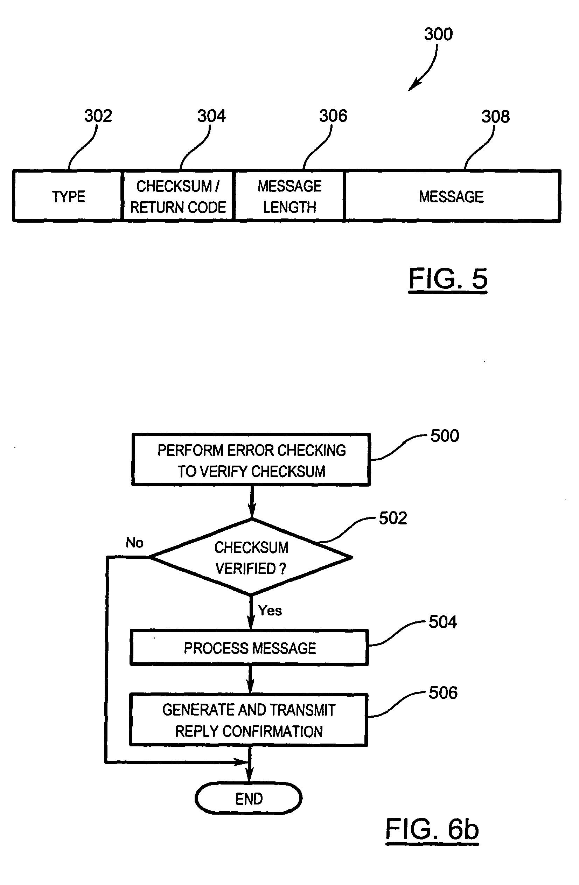

At steps 108 and 206 during communications between the wireless printers 22 and 30, a bidirectional data packet communications scheme is used. Figure 5 shows the data packet structure used by the wireless printers 22 and 30 during communications. As can be seen, each data packet 300 includes a message type byte 302, checksum/return code bytes 304, message length bytes 306 and message bytes 308. The message type byte 302 identifies the type of data packet and can take one of two forms, namely data type (0x00) or reply type (0xFF). The checksum/return code bytes 304 include a checksum for data types and a return code for reply types. The message length byte 306 identifies the length of the message in the message bytes 308.

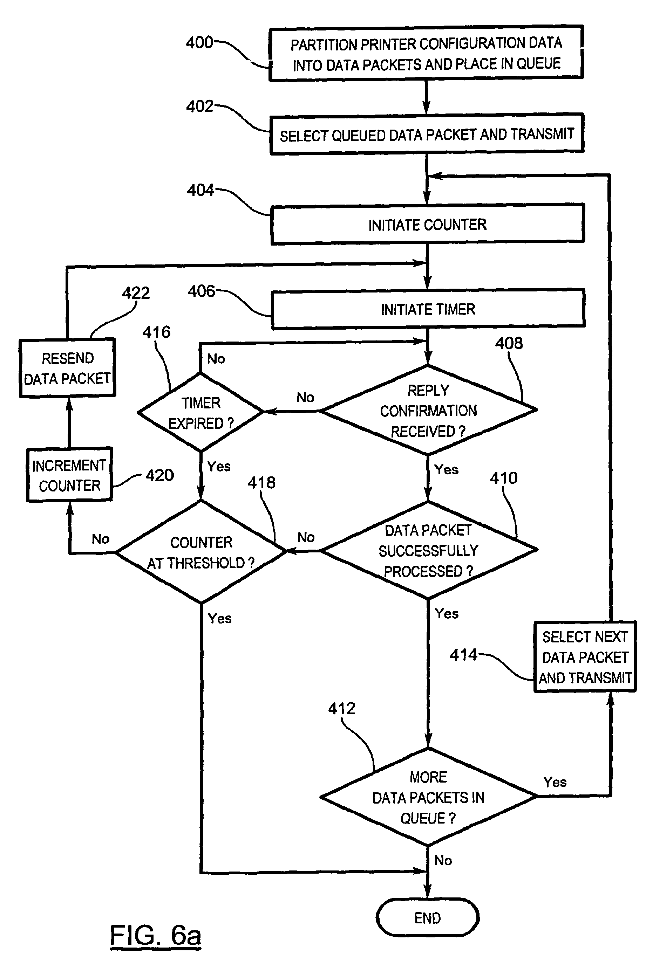

Turning now to Figures 6a and 6b, the steps performed by the wireless printers 22 and 30 during bidirectional data packet communications is shown. When the existing networked wireless printer 22 is to send printer configuration data to the new wireless printer 30, the wireless printer 22 partitions the printer configuration data into data packets and places the data packets in a queue (step 400). The wireless printer 22 then retrieves the first packet in the queue and transmits the retrieved data packet to the new wireless printer 30 (step 402). At that time, a counter is initiated (step 404) and a timer is initiated (step 406). The wireless printer 22 then awaits receipt of a reply data packet from the new wireless printer 30 confirming receipt of the transmitted data packet (step 408).

If the reply data packet is received before the timer expires (step 408), the wireless printer 22 checks the return code bytes 304 of the reply data packet to determine if the data packet was successfully processed by the new wireless printer 30 (step 410). If the data packet was successfully processed, the wireless printer 22 checks to see if more data packets exist in the queue (step 412). If not, the wireless printer 22 proceeds to step 110. If however, data packets exist in the queue, the wireless printer 22 selects and transmits the next data packet in the queue (step 414) before reverting to step 404.

At step 408, if the timer expires before a reply data packet is received from the new wireless printer 30 (step 416), the counter value is checked to determine if it has reached a threshold level (step 418). If not, the counter is incremented (step 420) and the wireless printer 22 resends the data packet (step 422) before reverting to step 406. At step 418, if the counter threshold level is reached, the new wireless printer 30 is deemed to be off line and the wireless printer 22 proceeds to step 110.

When the new wireless printer 30 receives a data packet from the wireless printer 22, the new wireless printer 30 performs error checking to ensure correct receipt of the data packet (step 500). Specifically, the new wireless printer 30 verifies the checksum bytes 304 of the data packet with a checksum calculated using the message bytes 308 of the data packet. If the checksum is verified (step 502), the new wireless printer 30 processes the message bytes 308 of the data packet (step 504). A reply data packet confirming safe receipt of the data packet is then transmitted to the wireless device 22 (step 506). The reply data packet identifies whether the message bytes 308 were successfully processed by the new wireless printer 30. In particular, the return code bytes 304 are set to 0x000 if the message bytes 308 were successfully processed and 0xFFFF if not. If the checksum is not verified at step 502, no reply data packet is returned to the wireless printer 22, prompting the wireless printer 22 to resend the data packet unless the timer has expired and/or the counter has reached the threshold level.

If the new wireless printer 30 needs to send data back to the wireless printer 22, the data is included in the message byte section of the reply data packet. If no data is being sent by the new wireless printer 30, the message byte section of reply data bytes is empty.

The automated wireless peripheral device configuration firmware may be embodied as computer readable program code stored on a computer readable medium. The computer readable medium is any data storage device that can store data, which can therafter be read by a computer processor. Examples of computer readable medium include read-only memory, random-access memory, CD ROMS, magnetic tape and optical data storage devices.

The above described embodiment shows automated configuration of wireless printers in a network environment using wireless communication between the wireless printers. The wireless communication between the wireless printers 22 and 30 may be carried out over an infrared, Bluetooth or Ad-hoc IEEE 802.lx connection. Those of skill in the art will appreciate that if desired, the source and target wireless printers can communicate printer configuration data over a wired link such as for example via a serial RS232 cable, a parallel RS422 cable, an RS485 universal serial bus or other suitable wired connection. The above automated configuration procedure is not limited to wireless printer configuration. Those of skill in the art will appreciate that the automated configuration procedure can be applied to other types of wireless peripheral devices.

Although particular embodiments have been described, those of skill in the art will appreciate that variations and modifications may be made without departing from the spirit and scope thereof as defined by the appended claims.

## Claims

1. A method of automated wireless peripheral device configuration in a network environment comprising:
conditioning an existing networked wireless peripheral device to transmit configuration data to a new wireless peripheral device to be added to the network environment;
receiving, at the new wireless peripheral device, the configuration data; and
automatically applying the configuration data to the new wireless peripheral device to enable the new wireless peripheral device to assume network operation.

2. The method of claim 1 wherein during the conditioning, the existing networked wireless peripheral device is conditioned to a source mode in response to input and wherein prior to said receiving, the new wireless peripheral device is conditioned to a target mode in response to input.

3. The method of claim 2 wherein said input is user input entered into the existing and new wireless peripheral devices via user interfaces thereof.

4. The method of claim 3 wherein prior to transmitting configuration data, the existing networked wireless peripheral device changes its current settings to default values, resets to put said default values into effect and generates said configuration data based on said default values.

5. The method of claim 4 wherein during said applying, said new wireless peripheral device updates its settings in accordance with said configuration data and resets to put said updated settings into effect.

6. The method of claim 5 wherein said existing networked wireless peripheral device automatically returns its settings and resets upon completing said conditioning.

7. The method of claim 6 wherein said configuration data is transmitted to said new wireless peripheral device in data packets.

8. The method of claim 6 wherein said existing networked wireless peripheral device remains in said source mode for a threshold period of time.

9. The method of claim 8 wherein said existing networked wireless peripheral device initiates a timer upon entry into said source mode, elapsing of said timer signifying said threshold period of time.

10. The method of claim 6 wherein said new wireless peripheral device remains in said target mode for a threshold period of time.

11. The method of claim 10 wherein said new wireless peripheral device initiates a timer upon entry into said target mode, elapsing of said timer signifying said threshold period of time.

12. The method of claim 6 wherein said existing networked wireless peripheral device and said new wireless peripheral device are wireless printers.

13. The method of claim 7 wherein said configuration data is transmitted to said new wireless peripheral device over a wireless communication link.

14. The method of claim 7 wherein said configuration data is transmitted to said new wireless peripheral device over a wired communication link.

15. A method of automatically configuring a new wireless printer to be added to a network environment including an existing wireless printer comprising:
placing the new wireless printer proximate to said existing wireless printer; and
conditioning the existing wireless printer to a source mode and the new wireless printer to a target mode wherein in said source mode, said existing wireless printer automatically transmits configuration data based on its settings to said new wireless printer and wherein in said target mode, said new wireless printer automatically applies received configuration data thereby to enable the new wireless printer to assume network operation.

16. The method of claim 15 wherein input is entered into said existing and new wireless printers via user interfaces thereof to condition said existing and new wireless printers to said source and target modes respectively.

17. The method of claim 15 wherein said existing wireless printer transmits preprogrammed configuration settings to said new wireless printer.

18. The method of claim 17 wherein in said source mode said existing wireless printer automatically changes its current settings to preprogrammed factory settings, transmits said factory settings to said new wireless printer and then restores its settings.

19. The method of claim 18 wherein said configuration data is transmitted to said new wireless printer via a wireless communication link.

20. The method of claim 18 wherein said configuration data is transmitted to said new wireless printer via a wired communication link.

21. A wireless peripheral device comprising:
memory storing wireless peripheral device configuration program code; and
a processor conditionable to execute said program code, upon execution of said program code, said processor transmitting network configuration data to a proximate wireless peripheral device to update and configure said proximate wireless peripheral device for network operation.

22. A wireless peripheral device according to claim 21 wherein said processor is conditioned to a source mode in response to user input, in said source mode, said processor automatically transmitting said network configuration data.

23. A wireless peripheral device according to claim 22 wherein in said source mode, said processor automatically changes its current settings to default values, uses said default values to generate said network configuration data and restores its settings after transmitting said network configuration data.

24. A wireless peripheral device according to claim 23 wherein said processor remains in said source mode for a threshold period of time.

25. A wireless peripheral device according to claim 24 wherein said processor is conditioned to said source mode in response to a series of interaction with a user interface of said wireless peripheral device.

26. A wireless peripheral device according to claim 25 wherein said wireless peripheral device is a wireless printer.

27. A computer readable medium including a computer program for automated wireless peripheral device configuration, said computer program comprising:
computer program code for changing settings of a wireless peripheral device to preprogrammed default values;
computer program code for generating network configuration data based on said default values;
computer program code for transmitting the network configuration data to a proximate wireless peripheral device; and
computer program code for restoring the settings of said wireless peripheral device.
